# EUROPEAN PATENT SPECIFICATION

(11) **EP 2 722 607 B1**
(45) Date of publication and mention of the grant of the patent: **23.01.2019**
(21) Application number: 12461554.3
(22) Date of filing: 16.10.2012
(51) Int. Cl.: F24F 7/007, F24F 110/40, F24F 11/72, F24F 11/63, F24F 11/77, F24F 11/33

(54) **Pressure differentiating device**
Differenzdruckvorrichtung
Dispositif de pression différentielle

(43) Date of publication of application: 23.04.2014
(73) Proprietor: Smay Sp. z.o.o., 31- 587 Krakow (PL)
(72) Inventor: Wiche, Jaroslaw, 30-798 Kraków (PL); Majdanski, Andrzej, 37-433 Bojanów (PL); Zapala, Robert, 32-444 Glogoczów (PL); Sypek, Grzegorz, 37-450 Stalowa Wola (PL); Maj, Marek, 32-095 Sulkowice (PL)
(74) Representative: Grzaka, Andrzej

(56) References cited:
- EP-A1- 2 500 663
- EP-A2- 1 076 211
- EP-A2- 2 314 944
- CA-A1- 2 405 858

## Description

The present invention relates to a pressure differentiating device used in systems to control smoke and heat spread.

An overpressure-based system to protect vertical evacuation routes against smoke infiltration is known from the description of the European Patent Application No. EP 2314944 A2. The overpressure-based system is equipped with at least two pressure-regulating governors, at least two reversible fans, at least two air admitting ducts, at least two pressure sensors, at least two temperature sensors, at least two controllers of pressure-controlling governors, at least two controllers of frequency converters, at least one input card with at least two temperature sensors connected thereto and, also, two pressure sensors, and, at least two frequency converters. The airflow inside the vertical evacuation route is controlled and adjusted based on the information acquired from the sensors of the internal and external temperature, respectively, as well as from the upper and lower pressure-regulating governors, respectively, since this information forces a preset distribution of pressures not exceeding 50 Pa +/-10%.

Another device is known from the description of the European Patent Application No. EP 1076211 A2. This device is designed to keep emergency life-saving routes within buildings smoke-free, in particular in internal staircases of the buildings. It consists of the following components integrated within one compact unit, preferable placed in a single housing: a fan unit, with at least one fan that is, preferably, very tightly closed, whereas the fan unit is provided to pump smoke-free air from, preferably, the building's external surrounding into the escape routes; a control unit that has a power supply, a first signal input for the primary circuit of the signal from the alarm sensor, for example, fire or smoke detector, or a manually activated alarm pushbutton, and a first control output for the primary control circuit used to control the fan unit, whereas this control unit is ready to generate a control signal from the signal incoming to the first signal input and indicating a fire alarm and with the use of this generated control signal the fan unit shall be controlled through the primary control circuit so as to start to pump smoke-free air into the escape route. Yet, the above described device has not the capacity to automatically adjust to the changing profile of the object being controlled.

Presently, there are known devices to protect escape routes against being filled with smoke, however, for proper functioning, those devices require well defined working conditions under which they will have to operate. What's more, an object under construction or reconstruction may be compared with a living organism, in which intensive changes in its shape and characteristics continuously occur. They mainly develop during the building finishing phase (mounting windows/doors, constructing installation pipes/tubes ducts, putting plasters, and constructing floors). As soon as the air leakages are reduced, the likelihood of oscillation to occur increases. Thus, an overpressure system should not be activated and calibrated until the building is completely constructed and finally finished.

The key reason causing the efficient calibration of the overpressure system to be impossible is the fact that the person activating the overpressure system is not given exclusive access to the whole building for a definite period of time. Usually, escape routes to be protected (staircases, entrance halls, corridors/lobbies) are communication routes used during the ongoing construction, installation, and finishing works. For the installer of the overpressure system, it is important to have times, during which unauthorized people are forbidden to appear in any of the escape routes in order to make compulsory tests and take measurements necessary for choosing correct controller's settings/limits. The objective of the present invention is to develop a device defined in claim 1 and targeted at creating and maintaining a pre-set value of overpressure in any space protected by the means of overpressure, for example, in a staircase, fire lobby, rescue lift shaft, or system of lift shafts, compared to the value of pressure in the space where the fire is. It is also possible to apply this device to control pressure within the air inflow duct, through which air is fed into the protected space. Owing to the application of a rotational speed governor equipped with a processor (hereinafter referred to as governor), it is not necessary to install any mechanical redundant-relief curtains as elements to governor pressure.

The essence of this invention is a pressure differentiating device with neural network-based predictive algorithm applied. This specific solution makes it possible to automatically change the settings of the governor according to changes occurring in the hydraulic profile of the protected space, and no manual intervention is needed. This fact is particularly vital in the situation this device operates in a real building during a fire, when unpredictable events may occur (for example, window cracks), which essentially impact the performance and in-service parameters of the pressure differentiating installation. The device according to this invention is characterized by the rotational speed governor with a processor to maintain a pre-set pressure difference by identifying the cubature and tightness of the object under control with the use of a neural network structure; in this way, the need to calibrate devices each time when the cubature and/or tightness has been changed is eliminated. Preferably, the device's structure comprises a self-supporting housing, so, the sub-units of the device can work in a vertical or horizontal position. Preferably, the device is fitted with a measuring strip to measure the volumetric flow amount that is placed inside the fan. Preferably, a shut-off throttle has an anti-freezing protection system consisting of a directional infrared radiator and a thermostat. Preferably, the components of the throttle are black to absorb the maximum amount of infrared radiation, and the colours of other internal elements of the device are bright to reflect radiation and to direct it onto operationally important elements of the throttle (i.e. that are vital for the operation) and to prevent the locking caused by low temperatures. Preferably, a brake resistor enables the collection of energy from the fan being slowed down from a maximal to a minimal rotational speed; in this way, it is ensured that the appropriate pressure difference between the protected and reference space be achieved within a time span not exceeding three seconds. Preferably, the device has a special power and control system to power and control a set of two air boxes: basic air box and reserve air box; those air boxes cooperate with a smoke detector, whereas one air box is permanently open and the other one is closed.

The advantage of the device under this Invention is its capability to self-adapt (automatically adapt) to changing external conditions (such as wind, high and low temperatures producing a so called stack effect or vertical pressure gradation, extremely low temperatures, high humidity along with a dew point temperature being reached what is often manifested in the freezing of those system elements that are most important for the functioning of the entire system) and internal conditions in the building (for example, change in the tightness of the spaces being protected using overpressure).

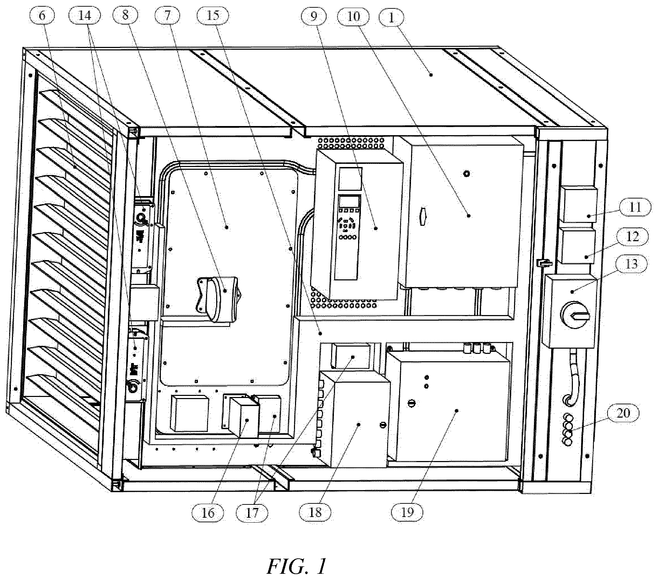

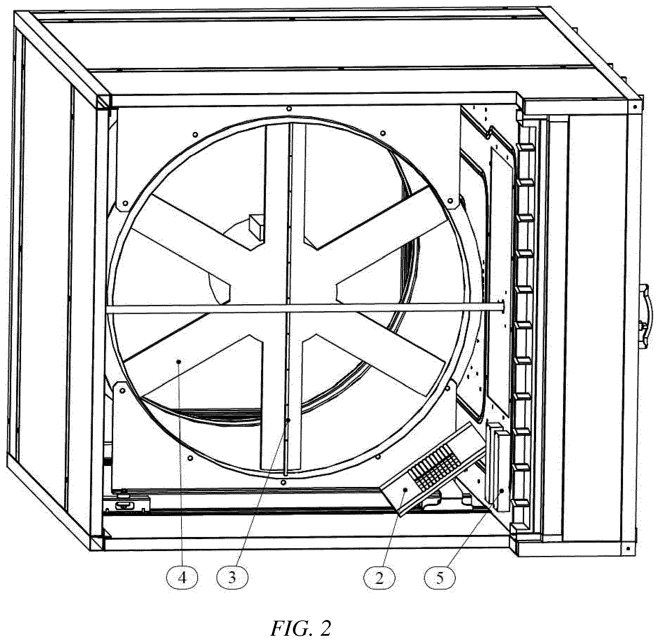

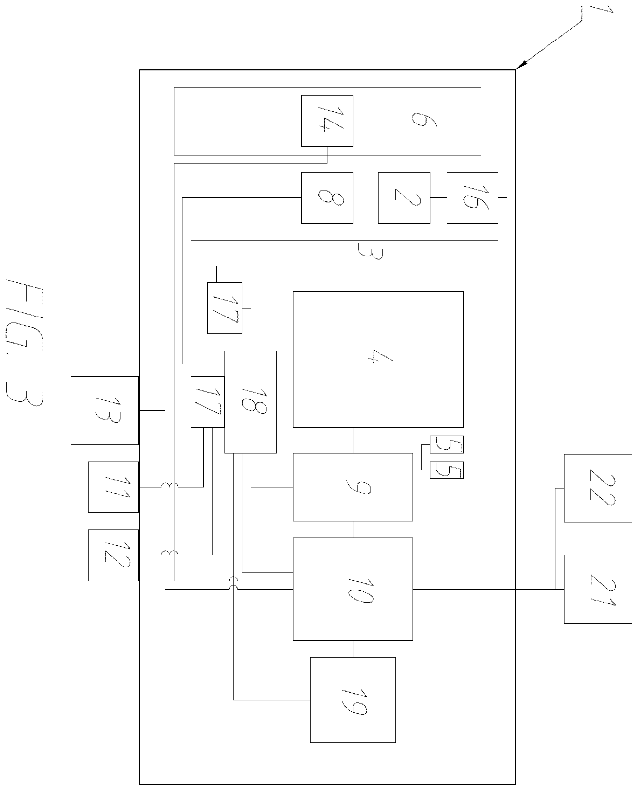

The object of the invention is exemplified in the attached drawing showing an embodiment of the invention. In the drawing, in Fig. 1 is shown a schematic perspective view of the device; in Fig. 2 is shown a view of fan with the measuring strip, brake resistor, and infrared radiator; whereas Fig. 3 represents a diagram of connections between automatic control elements within the device.

The device according to the invention comprises the following units: self-supporting housing **1** that allows the device's other sub-units to operate in a vertical or a horizontal position; fan **4** build-in in the housing **1**; shut-off throttle **6** with actuator **14**; inspection panel **7**; smoke detectors **8**; frequency converter **9** with brake resistor **5**; power box **10**; 24VDC power supply unit **19**; two pressure difference connection points **11** and **12** with pressure sensor (pressure difference converter) **17**; governor **18** with a software to keep the pre-set pressure difference by identifying the cubature and tightness of the object under control with the use of a neural network structure, what makes it possible to eliminate the need for calibrating devices each time when the cubature and/or tightness has been changed. Moreover, the device is equipped with an anti-freezing protection system to protect the shut-off throttle **6** against freezing, which consists of a directional infrared radiator **2** and a thermostat **16.** The components of the throttle **6** are black to absorb the maximum amount of infrared radiation, and the colours of other internal elements of the device are bright to reflect the radiation and to direct it onto operationally important elements of the throttle (i.e. that are vital for the operation) and to prevent locking caused by low temperatures. Additionally, the device is fitted with a measuring strip **3** to measure the volumetric flow amount that is placed within the fan, as well as a cable duct **15**, points with control wires **20**, and main switch **13**. Furthermore, the device has a special power and control system to power and control a set of two air boxes: basic air box **21** and reserve air box **22**; this set of air boxes cooperates with a smoke detector **8**, whereas one air box is permanently open and the other one is closed.

In the device according to the invention, in its self-supporting housing **1** with the inspection panel **7**, there is a build-in fan **4** with a frequency converter **9** to supply air into the space protected using overpressure. The frequency converter **9** is powered from the power box **10**, whereas the power box **10** is powered directly from the power grid using the main on-off switch **13** mounted on the housing **1**. The frequency converter **9** receives a control signal from the governor **18**, and, next, it sends an alternating voltage of the controlled frequency between 0 and 50 Hz over to the fan **4**. Based thereon, it is possible to precisely control the fan's engine revolutions, i.e. the output of the fan **4**. The control strategy assumes that the nominal value of static differential pressure (i.e. pressure difference between the protected and reference space) equalling 50 Pa (or any other value as assumed in the design) is being precisely watched and controlled by continuously measuring this value using a pressure difference converter (pressure sensor) **17** through the taken out impulse probes, and the converter (sensor) **17** is connected with the governor **18**. Although the control system is capable of identifying the criterion being currently carried out (air pressure/air flow), the general, most important objective is to generate and control the nominal value of differential pressure irrespective of where the escape egress door is situated. This objective is achieved by automatically adjusting the capacity of aeration fan **4** fitted with the frequency converter **9** according to the current value of air leakage from the protected space. The governor **18** identifies and interprets the air flow and pressure criterion based on the measured value of differential pressure and the existing flow as shown on the measuring strip **3** and measured using a pressure difference converter (pressure sensor) **17** that is also connected with the governor **18**. In case, the total capacity of the aeration fan **4** is not sufficient to cover air leakage from the protected space, the overpressure value decreases and the air flow criterion is being performed. In order to increase the capacity of the fan **4**, the frequency converter **9** transmits the necessary value of power supply current of a definite frequency. The energy from the fan **4** is given over into the frequency converter **9**, and, from here, into the brake resistor **5** that is connected with the frequency converter **9**, and owning to this energy transfer, it is possible to decrease the capacity of the fan **4** and to change its high rotational speed into low rotational speed during a time span not exceeding three seconds.

At all times, the pressure differentiating device is at the voltage of (3x400VAC), and monitoring, ready to assume operations. The governor **18** controls, in real time, all sub-units in the device as well as the correctness of their functioning and the status of the connections between them. Additionally, the governor **18** is directly linked with a system that initiates and monitors its operation (i.e. with one of the following systems: a fire signalling and fire control system, smoke removal control system, monitoring system, or access control system). In case one of the sub-units of the device fails to operate or is broken (i.e. the frequency converter **9**; the shut-off throttle **6** with the actuator **14**; smoke detectors in a housing suitable for tunnel/channel installation **8**, 24 VDC power supply unit **19**; and P-MAC pressure sensor (pressure difference converter) **17**), or a connection between the governor **18** and one of the sub-units of the device are broken down or fail to operate, the governor **18** sends a collective breakdown/failure signal into the initiating system. At the moment the pressure differentiating device is receiving a signal from the operation initiating system to start operation, it begins to carry out the algorithm of performance operations. At first, the governor **18** sends a 'start to operate' signal into the power box **10**, which, then, opens the shut-off throttle **6** with the actuator **14**. As soon as the opening operation of the shut-off throttle **6** with the actuator **14** has been fully accomplished, the throttle **6** transfers a full opening confirmation signal to the governor **18** to confirm the full opening of the throttle **6**. In the situation that the governor **18** does not receive the full opening confirmation signal from the throttle **6** with actuator **14**, then, after the lapse of the earlier pre-set time span, the governor **18** diagnoses the failure/breakdown of the throttle **6** and sends an information on the collective failure/breakdown into the initiating system, and, also, it starts a further pre-defined operation. As soon as the throttle **6** with actuator **14** has been fully opened, the governor **18** transmits an 'operation start' signal to the frequency converter **9**, and the frequency converter **9** begins to supply the fan **4** with an alternating current of a definite frequency, thus, the fan **4** starts to work. In case, the governor **18** confirms that all the elements of the device operate correctly and the control algorithm is also correctly performed, it sends a 'performance confirmation' signal over to the initiating system. But when the governor **18** receives a 'failure/breakdown' signal from any of the sub-units of the device (i.e. from the frequency converter **9**; shut-off throttle **6** with the actuator **14**; smoke detectors in a housing suitable for tunnel/channel installation **8**; 24 VDC power supply unit **19**; or from the P-MAC pressure sensor or pressure difference converter **17**) or it has diagnosed the incorrect realization of the algorithm of operation performance, it does not send an 'operation confirmation' signal into the initializing system, instead, it sends a collective failure/breakdown signal. If, during the operation of the device (i.e. it carries out the algorithm of protecting the escape route by overpressure for the smoke and heat spread control system), the governor **18** receives a failure/breakdown signal from any of the sub-units of the device (i.e. from the frequency converter **9**; shut-off throttle **6** with the actuator **14**; smoke detectors in a housing suitable for tunnel/channel installation **8**; 24 VDC power supply unit **19**; or P-MAC pressure sensor or pressure difference converter **17** or if the connection between the governor **18** and one of the sub-units of the device has failed/broken down, then, the governor **18** sends a collective failure/breakdown signal into the initiating system.

The realization of the algorithm of performance operations (i.e. the overpressure-based protection of escape route against being filled with smoke in the smoke and heat spread control systems) is as follows. The objective of the pressure differentiating device is to ensure an appropriate pressure difference between escape routes and a reference space. The unit responsible for carrying out and monitoring/controlling this process is the governor **18.** The governor **18** is connected with a pressure difference converter (pressure sensor) **17** through a FireBus protocol. The pressure difference converter (pressure sensor) **17** receives, through impulse probes, a pneumatic signal on the difference value of pressures between the protected space and the reference space; next, it sends this signal into the governor **18** through the FireBus protocol. The governor **18** analyses the parameter value of the pressure received from the pressure difference converter (pressure sensor) **17** and, also, data on the historical values thereof. Based on those data as well as on all the knowledge acquired and saved during the automatic self-adaptation process (referred to as a knowledge-base), the governor **18** sends a control signal into the frequency converter **9** that contains information on the pre-set value of the frequency parameter to be used to supply the fan **4** with power and to monitor it. Thus, the fan **4** gets a correct rotational speed, and, owing to it, an appropriate pressure difference is generated between the escape route space and reference space. As soon as the governor **18** detects, based on the information from the pressure difference converter (pressure sensor) **17**, a drop in the pressure difference between an escape route and the reference space and interprets this drop (based on the historical data and knowledge-based data) as a total depressurization of the escape route (owing to the open escape egress door), it sends an information signal to the frequency converter **9** indicating that the fan **4** has been put on its full rotational speed, and the frequency converter **9** begins to supply the fan **4** with an alternating current of 50Hz frequency (the fan **4** runs up to its full rotational speed). The fan **4** is being fully run up within a time span shorter than three seconds. In the situation where the fan **4** operates at its full rotating speed and the governor **18**, based on the information acquired from the pressure difference converter (pressure sensor) **17**, detects an increase in the pressure difference between an escape route and the reference space and it interprets is (based on the historical data and knowledge-based data) as a total pressurization of the escape route (owing to closing the escape egress door), it sends an information signal to the frequency converter **9** indicating the fan **4** has been brought on a rotational speed necessary to maintain the earlier pre-set pressure difference between the protected space and the reference space; at the same time, the frequency converter **9** starts to supply the fan **4** with an alternating current of a frequency as needed to maintain the pre-set pressure difference between the protected space and the reference space (the fan **4** begins to operate at a definite rotational speed). The fan **4** is slowed down to a rotational speed that is appropriate for the specific, pre-determined working conditions during a time span shorter than three seconds. The pressure differentiating device is additionally equipped with an anti-freezing system. This system consists of a directional infrared radiator **2** monitored and supplied through a thermostat **16**, whereas the thermostat **16** is directly supplied with power from the power box **10**. The shut-off throttle **6** is black-painted to allow the infrared radiation, thus, the thermal energy, to be absorbed. When the temperature in the pressure differentiating device decreases below a predetermined and pre-set value, the thermostat **16** causes the infrared radiator **2** to switch on to light the throttle **6**. The throttle **6** is painted black and absorbs infrared radiation, thus, it increases its own temperature. In this way, its freezing at negative ambient temperatures is prevented. The pressure differentiating device also has a system to power and control/monitor a set of two air boxes: basic air box **21** and reserve air box **22**; this set of two air boxes cooperates with the smoke detector **8** in a housing for tunnel/channel installation. One of the air boxes is permanently open, whereas the other one - permanently closed. When the smoke detector **8** in a housing for tunnel/channel installation detects fire smoke, it instantly conveys this information over to the governor **18**, and it sends a signal into the power supply box **10**, and the power supply box **10** closes the open air box and opens the closed air box.

## Claims

1. A pressure differentiating device for ensuring an appropriate pressure difference between escape routes and a reference space to protect the escape routes against being filled with smoke, the pressure differentiating device comprising a housing (1) with an inspection panel (7), a fan (4) build-in the housing (1) for supplying air into space protected using overpressure, a shut-off throttle (6) with an actuator (14) for opening the shut-off throttle (6), a smoke detector (8), a frequency converter (9) with a brake resistor (5) sending an alternating voltage of controlled frequency between 0 and 50 Hz to the fan (4), a power supply box (10) powering the frequency converter (9), a 24V power supply unit (19), pressure difference connection points (11, 12) with a pressure sensor (17) connected with a rotational speed governor (18) with a processor for identifying and interpreting an airflow and pressure criterion based on a measured value of differential pressure and existing flow measured using the pressure sensor (17), **characterised in that** the rotational speed governor (18) with the processor has a software with implemented neural network structure for maintaining the pre-set pressure difference while identifying the cubature and tightness of the object under control to eliminate the need to calibrate devices each time when the cubature and/or tightness has been changed.

2. The device according to claim 1 **characterised in that** the housing (1) is a self-supporting structure that enables the operation of the whole device in the vertical or horizontal position.

3. The device according to claim 1 or 2 **characterised in that** a measuring strip (3) of the volumetric flow amount is placed within the internal space of the fan (4).

4. The device according to claim 1 or 2 or 3 **characterised in that** the shut-off throttle (6) has an anti-freezing protection system fitted with a directional infrared radiator (2) and a thermostat (16).

5. The device according to claim 1 or 2 or 3 or 4 **characterised in that** the elements of the throttle (6) are black in order to absorb the maximum quantity of infrared radiation, and the colours of all the other elements inside the device are bright to enable the radiation to be reflected and directed onto those elements of the throttle (6) to prevent its locking caused by low temperatures.

## Patentansprüche

1. Differenzdruckvorrichtung, die eine geeignete Druckdifferenz zwischen Fluchtwegen und einem Bezugsraum gewährleistet, um die Fluchtwege vor dem Füllen mit Rauch zu schützen, umfassend ein Gehäuse (1) mit einem Inspektionsfeld (7), einen Ventilator (4), der in das Gehäuse (1) eingebaut ist, zum Zuführen von Luft in den geschützten Raum mithilfe von Überdruck, eine Absperrklappe (6) mit einem Stellglied (14) zum Öffnen der Absperrklappe (6), einen Rauchmelder (8), einen Frequenzumrichter (9) mit einem Bremswiderstand (5), der eine Wechselspannung mit geregelter Frequenz zwischen 0 und 50 Hz zum Ventilator (4) sendet, einen Stromversorgungskasten (10), der den Frequenzumrichter (9) mit Strom versorgt, eine 24-V-Stromversorgungseinheit (19), Druckdifferenz-Anschlusspunkte (11, 12) mit einem einen Drucksensor (17), der an einen Drehzahlregler (18) mit einem Prozessor angeschlossen ist, um anhand des mit dem Drucksensor (17) gemessenen Messwerts des Differenzdrucks und des vorliegenden Luftstroms ein Luftstrom- und Luftdruckkriterium zu ermitteln und zu interpretieren, **dadurch gekennzeichnet, dass** der Drehzahlregler (18) mit Prozessor eine Software mit einer implementierten neuronalen Netzstruktur aufweist, um die voreingestellte Druckdifferenz aufrechtzuerhalten, indem der Rauminhalt und die Dichtheit des überwachten Objekts ermittelt wird, womit die Notwendigkeit entfällt, die Vorrichtungen bei jeder Änderung von Rauminhalt und/oder Dichtheit des Raums neu zu kalibrieren.

2. Vorrichtung nach Anspruch 1, **dadurch gekennzeichnet, dass** das Gehäuse (1) eine unabhängige Struktur ist, die den Betrieb der gesamten Vorrichtung in senkrechter oder waagerechter Position ermöglicht.

3. Vorrichtung nach Anspruch 1 oder 2, **dadurch gekennzeichnet, dass** der Messstreifen (3) des Volumenstroms im Inneren des Ventilators (4) angebracht ist.

4. Vorrichtung nach Anspruch 1, 2 oder 3, **dadurch gekennzeichnet, dass** die Absperrklappe (6) ein Frostschutzsystem aufweist, das mit einem gerichteten Infrarotstrahler (2) und einem Thermostaten (16) ausgestattet ist.

5. Vorrichtung nach Anspruch 1, 2, 3 oder 4, **dadurch gekennzeichnet, dass** die Elemente der Absperrklappe (6) schwarz sind, um ein Maximum an Infrarotstrahlung zu absorbieren, und die Farben aller anderen internen Elemente der Vorrichtung hell sind, um die Strahlung reflektieren und auf jene Elemente der Klappe (6) richten zu können, um deren Blockierung durch tiefe Temperaturen zu verhindern.

## Revendications

1. Dispositif de différentiation de pression destiné à garantir une différence de pression appropriée entre des voies d'évacuation et un espace de référence afin de protéger les voies d'évacuation pour éviter qu'elles ne soient remplies de fumée, le dispositif de différentiation de pression comprenant un boîtier (1) avec un panneau d'inspection (7), un ventilateur (4) intégré dans le boîtier (1) pour alimenter en air l'espace protégé au moyen d'une surpression, une soupape d'arrêt (6) avec un actionneur (14) pour ouvrir la soupape d'arrêt (6), un détecteur de fumée (8), un convertisseur de fréquence (9) avec une résistance de frein (5) envoyant une tension alternative de fréquence contrôlée entre 0 et 50 Hz au ventilateur (4), une boîte d'alimentation électrique (10) alimentant le convertisseur de fréquence (9), une unité d'alimentation électrique de 24 V (19), des points de connexion de différence de pression (11, 12) avec un capteur de pression (17) connecté avec un régulateur de vitesse de rotation (18) avec un processeur pour identifier et interpréter un critère de pression et d'écoulement d'air sur la base d'une valeur mesurée de pression différentielle et de l'écoulement existant mesuré au moyen du capteur de pression (17), **caractérisé en ce que** le régulateur de vitesse de rotation (18) avec le processeur présente un logiciel ayant une structure de réseau neuronal mise en place pour maintenir la différence de pression prédéfinie tout en identifiant le cubage et l'étanchéité de l'objet commandé afin d'éliminer le besoin d'étalonner les dispositifs à chaque fois que le cubage et/ou l'étanchéité a été modifié(e).

2. Dispositif selon la revendication 1, **caractérisé en ce que** le boîtier (1) est une structure autoportante qui permet le fonctionnement du dispositif entier dans la position verticale ou horizontale.

3. Dispositif selon la revendication 1 ou 2, **caractérisé en ce qu'**une bande de mesure (3) de la quantité de débit volumétrique est placée dans l'espace interne du ventilateur (4).

4. Dispositif selon la revendication 1 ou 2 ou 3, **caractérisé en ce que** la soupape d'arrêt (6) présente un système de protection antigel doté d'un radiateur infrarouge directionnel (2) et d'un thermostat (16).

5. Dispositif selon la revendication 1 ou 2 ou 3 ou 4, **caractérisé en ce que** les éléments de la soupape (6) sont noirs afin d'absorber la quantité maximale de rayonnement infrarouge et les couleurs de tous les autres éléments à l'intérieur du dispositif sont claires afin de permettre au rayonnement d'être réfléchi et dirigé sur ces éléments de la soupape (6) pour éviter son verrouillage provoqué par de faibles températures.
